**Europäisches Patentamt**

**European Patent Office**

**Office européen des brevets**

(19)

(11) Veröffentlichungsnummer: **0 286 585 B1**

# EUROPÄISCHE PATENTSCHRIFT

(12)

(45) Veröffentlichungstag der Patentschrift:
24.04.91 Patentblatt 91/17

(51) Int. Cl.⁵: **B23H 7/26**

(21) Anmeldenummer: **88810152.4**

(22) Anmeldetag: **10.03.88**

(54) **Erodiermaschine mit einer Drehantriebsvorrichtung.**

(30) Priorität: **08.04.87 DE 3711819**

(43) Veröffentlichungstag der Anmeldung:
**12.10.88 Patentblatt 88/41**

(45) Bekanntmachung des Hinweises auf die
Patenterteilung:
**24.04.91 Patentblatt 91/17**

(84) Benannte Vertragsstaaten:
**AT BE CH DE ES FR GB GR IT LI LU NL SE**

(56) Entgegenhaltungen:
**GB-A- 2 072 562**
**US-A- 3 971 293**

(73) Patentinhaber: **Erowa AG**
**Winkelstrasse 8**
**CH-5734 Reinach (CH)**

(72) Erfinder: **Niklaus, Liechti**
**Kirchenbreite 42**
**CH-5734 Reinach (CH)**
Erfinder: **Schneider, Rudolf**
**Gondiswinkel**
**CH-5734 Reinach (CH)**

(74) Vertreter: **Rottmann, Maximilian R.**
**c/o Rottmann, Maspoli + Zimmermann AG**
**Glattalstrasse 37**
**CH-8052 Zürich (CH)**

## Beschreibung

Die vorliegende Erfindung bezieht sich auf eine Erodiermaschine mit einer Drehantriebsvorrichtung für die Pinole oder die Werkstückaufnahme.

Solche Maschinen ermöglichen bekanntlich ein äusserst präzises Bearbeiten von Werkstücken durch elektroerosiven Materialabtrag. Um eine präzise Formgebung eines Werkstückes zu erreichen, müssen die Teile und Elemente der Erodiermaschine mit mindestens der gleich hohen, möglichst mit einer noch höheren Präzision gefertigt sein und arbeiten.

Im Beispielsfall einer Senkerodiermaschine wird eine Elektrode verwendet, um das Werkstück zu bearbeiten, die in der Pinole der Maschine höhenverstellbar und verdrehbar gehalten ist. Zur Verdrehung der Pinole und damit der Elektrode ist ein Drehantrieb vorgesehen, der üblicherweise elektromotorisch betätigt ist. Um die Pinole in eine gewünschte Winkelausrichtung zu bringen, wird die Pinole von einem Elektromotor über ein Untersetzungsgetriebe in Drehung versetzt.

Bei bekannten, derartigen Drehantriebsvorrichtungen ist das Übertragungsspiel zwischen Motorwelle, Getriebe und Pinole eines der Hauptprobleme. Man war daher gezwungen, äusserst präzise gefertigte Untersetzungsgetriebe und Kraftübertragungselemente zu verwenden, um die geforderte Drehwinkel-Positioniergenauigkeit der Pinole erreichen zu können. Derartige Antriebe sind aber sehr teuer, bedingen eine aufwendige Wartung und unterliegen einem verhältnismässig raschen Verschleiss, der die erreichbare Genauigkeit beeinträchtigt. Entsprechendes gilt für Drehantriebe, die die Werkstückaufnahme zu verdrehen gestatten.

Es ist die Aufgabe der Erfindung, eine Erodiermaschine mit einem Drehantrieb der eingangs genannten Art zu schaffen, der die vorgenannten Nachteile nicht mehr aufweist, der also preisgünstig herstellbar und auch über längere Zeit zuverlässig im Betrieb ist, der eine nochmals gesteigerte Drehwinkel-Positioniergenauigkeit ermöglicht und der eine rasche Verdrehung der Pinole bzw. der Werkstückaufnahme in eine gewünschte Winkellage gestattet.

Gemäss der Erfindung wird die gestellte Aufgabe dadurch gelöst, dass die Drehantriebsvorrichtung mindestens zwei bezüglich der Drehrichtung umsteuerbare Elektromotoren, je ein jedem Elektromotor zugeordnetes Reduktionsgetriebe, das ein mit dem Elektromotor gekoppeltes und von diesem angetriebenes Eingangsglied sowie ein mit der Pinole oder der Werkstückaufnahme gekoppeltes und jene antreibendes Ausgangsglied umfasst, ein mit der Pinole oder der Werstückaufnahme gekoppelten Drehgeber sowie ein mit dem Drehgeber und den Elektromotoren verbundenes Steuergerät aufweist, welches mindestens zwei der Elektromotoren betragsund/oder richtungsmässig stets ungleich antreibt.

Dadurch wird der eigentliche Antriebsstrang, nämlich das Untersetzungsgetriebe sowie die zugeordneten Kraftübertragungsteile, stets unter einer gewissen Vorspannung gehalten, welche jegliches Spiel im Getriebe und zwischen den Zahnrädern sowie die in jedem mechanischen System immer vorhandene Elastizität unwirksam macht. Der Vorteil ist, dass das Untersetzungsgetriebe und die Kraftübertragungselemente von viel einfacherer Bauart und deshalb preisgünstiger sein können. Auch wenn sich das Übertragungsspiel im Lauf der Zeit, z.B. durch Verschleiss, vergrössern sollte, übt diese Erscheinung keinen nachteiligen Einfluss auf die Positioniergenauigkeit aus.

Im allgemeinen wird man zwei Elektromotoren verwenden ; es ist aber je nach Anwendungsfall auch möglich, eine grössere Zahl davon vorzusehen.

Das Merkmal "betrags- und/oder richtungsmässig ungleich" ist je nach Betriebszustand der Vorrichtung wie folgt zu verstehen :

1. Bei Stillstand der Pinole bzw. der Werkstückaufnahme werden die beiden Elektromotoren betragsmässig gleich, aber richtungsmässig entgegengesetzt angetrieben.

2. Beim Antrieb der Pinole bzw. der Werkstückaufnahme zu einer ersten, höheren Drehgeschwindigkeit werden die beiden Elektromotoren betragsmässig unterschiedlich, aber richtungsmässig gleich angetrieben.

3. Beim Antrieb der Pinole bzw. der Werkstückaufnahme zu einer zweiten, niedrigeren Drehgeschwindigkeit werden die beiden Elektromotoren betragsmässig unterschiedlich und richtungsmässig entgegengesetzt angetrieben.

Das heisst also, dass die beiden Elektromotoren nie identisch auf die Pinole bzw. die Werkstückaufnahme einwirken, sondern stets eine gewisse Vorspannung im Antriebsstrang erzeugen.

Vorzugsweise wird der eine Elektromotor sowohl beim Stillstand als auch bei der zweiten, niedrigeren Drehgeschwindigkeit der Pinole bzw. der Werkstückhalterung betrags- und richtungsmässig gleich angetrieben. Dadurch kann erreicht werden, dass beim Beginn der Drehbewegung der Pinole bzw. der Werkstückhalterung kein undefinierter Zustand im Antriebsstrang auftreten kann, indem dieser eine Elektromotor sowohl im Stillstand als auch bei der Verdrehung der Pinole bzw. der Werkzeughalterung stets ein gewisses Drehmoment in einer ersten Drehrichtung ausübt, währenddem der andere Elektromotor im Moment des Anfahrens ein stärkeres Drehmoment als der erstgenannte Elektromotor ausübt und somit die Pinole bzw. die Werkstückaufnahme verdreht.

Bei einer Weiterbildung des Erfindungsgegenstandes kann vorgesehen sein, dass der eine Elektromotor beim Übergang vom Stillstand der Pinole bzw. der Werkstückaufnahme in die erste, höhere Drehgeschwindigkeit, im gleichen Drehsinn, zu höherer Geschwindigkeit und der andere Elektromotor zu umgekehrtem Drehsinn umgesteuert wird, wobei die Umsteuerung des genannten, anderen Elektromotors verzögert erfolgt. Auch diese Massnahme, die zufolge der Massenträgheit des Antriebsstranges zwar nicht unbedingt erforderlich ist, zielt darauf ab, keinen undefinierten bzw. unbelasteten Zustand im Antrieb aufkommen zu lassen.

Im folgenden wird ein Ausführungsbeispiel der erfindungsgemässen Erodiermaschine, unter Bezugnahme auf die beiliegenden Zeichnungen, näher erläutert. In den Zeichnungen zeigen :

Fig. 1 eine teilweise aufgeschnittene Aufsicht auf eine Drehantriebsvorrichtung für die Pinole einer Erodiermaschine ;

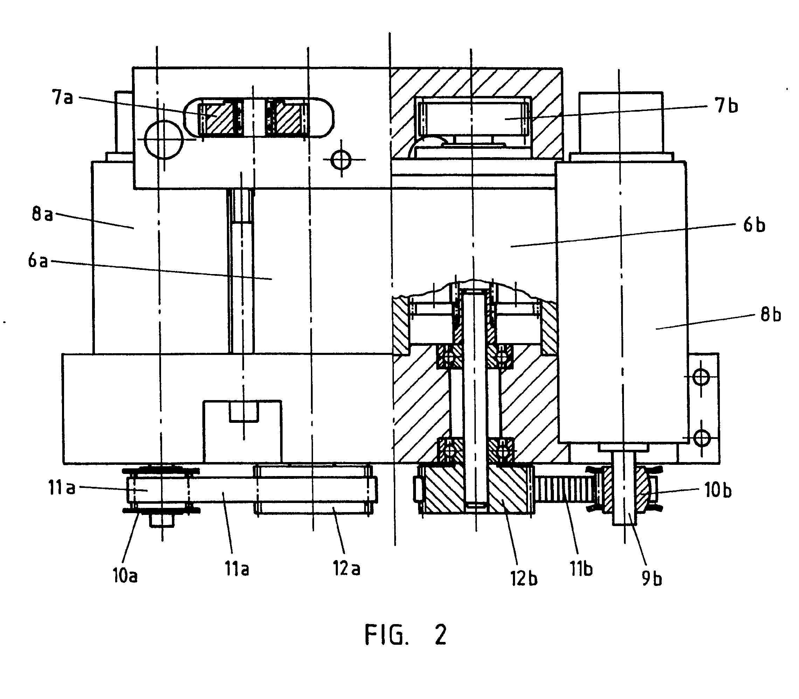

Fig. 2 eine teilweise aufgeschnittene Seitenansicht der Vorrichtung von Fig. 1 ;

Fig. 3 ein Schema zur Veranschaulichung der Wirkungsweise des Drehantriebs, und

Fig. 4a + 4b zwei Ausschnitte aus einem der Fig. 3 entsprechenden Schema.

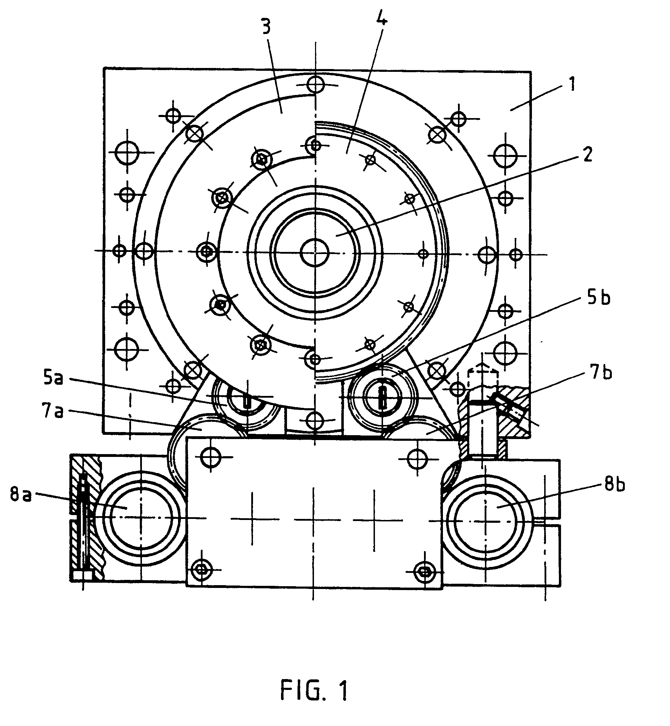

Gemäss Fig. 1 umfasst die Drehantriebsvorrichtung ein Lagergehäuse 1, in welchem eine Pinole 2 durch nicht näher dargestellte, an sich bekannte Mittel drehbar gelagert ist. Über der Pinole 2 ist ein koaxial angeordneter und mit der Pinole drehfest gekoppelter Drehgeber 3 vorgesehen, der als Winkelpositionsmelder dient und an ein ebenfalls nicht dargestelltes Steuergerät angeschlossen ist.

Die Pinole 2 trägt ein Stirnrad 4, über welches sie angetrieben wird und welches mit zwei Zwischenzahnrädern 5a und 5b im Eingriff steht. Letztere stehen ihrerseits mit den als Ausgangsglieder je eines Reduktionsgetriebes 6a und 6b dienenden Zahnrädern 7a und 7b im Eingriff. Zwei Elektromotoren 8a und 8b, die neben den beiden Getrieben 6a und 6b angeordnet sind, tragen an ihrer Abtriebswelle 9a und 9b je ein Pulley 10a und 10b, die über je einen Zahnriemen 11a und 11b mit dem zugeordneten, als Eingangsglied dienenden Pulley 12a und 12b verbunden sind.

Es leuchtet jedem Fachmann ein, dass ein derartiger oder ähnlicher Antriebsstrang eine nicht zu vernachlässigende Elastizität besitzt, und dass in den Getrieben 6a und 6b sowie zwischen den miteinander kämmenden Zahnrädern 4, 5a, 7a bzw. 4, 5b, 7b ein gewisses Spiel herrscht, das konstruktiv nur schwierig und mit aufwendigen Massnahmen minimiert werden kann.

Erfindungsgemäss werden nun diese Nachteile dadurch vermieden, dass die beiden Elektromotoren 8a und und 8b vom Steuergerät nie gleich angetrieben werden. Mit anderen Worten, im Stillstand wird der eine Elektromotor 8a z.B. im Uhrzeigersinn und der andere Elektromotor 8b im Gegenuhrzeigersinn, beide jedoch derart angetrieben, dass sie ein betragsmässig gleiches Drehmoment auf den Antriebsstrang und damit auf das Zahnrad 4 der Pinole 2 ausüben. Dadurch steht dieser unter einer gewissen Vorspannung, so dass alles Spiel aufgehoben und die Elastizität kompensiert ist. Soll die Pinole 2 langsam, z.B. in eine naheliegende Winkelposition verdreht werden, wird beim einen der Elektromotoren, je nach gewünschter Drehrichtung z.B. beim Motor 8a, das Drehmoment erhöht, währenddem sich am Betriebszustand des anderen Elektromotors 8b nichts ändert. Soll die Pinole 2 jedoch schnell in eine entferntere Winkelposition verdreht werden, wird beim einen der Elektromotoren, wiederum je nach gewünschter Drehrichtung z.B. beim Motor 8a, das Drehmoment erhöht, und der andere Elektromotor 8b wird umgesteuert, jedoch so betrieben, dass er ein geringeres Drehmoment abgibt.

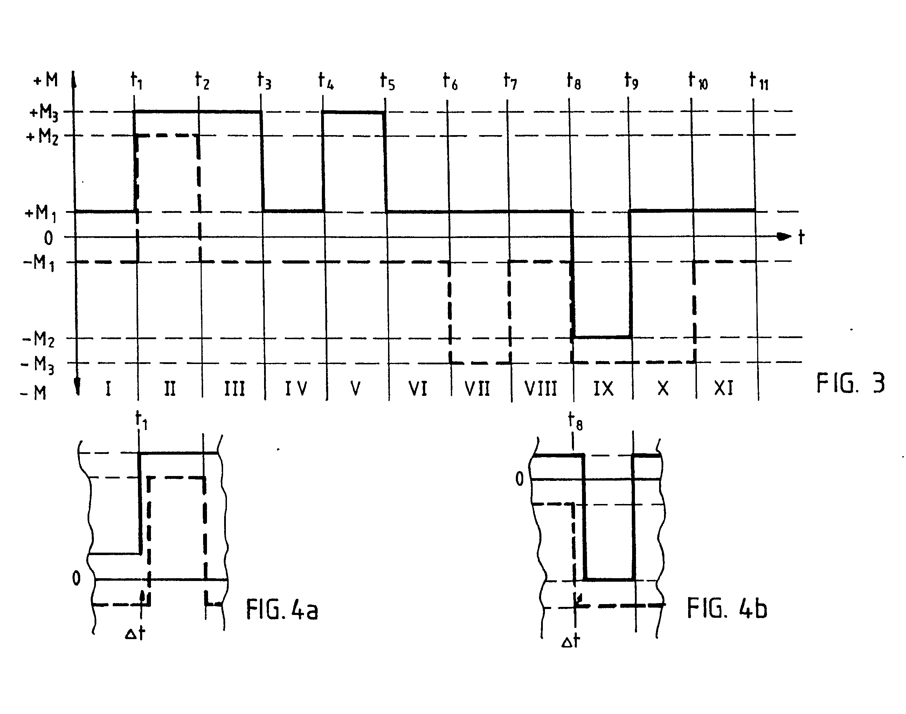

In der schematischen Darstellung von Fig. 3 sind diese Zusammenhänge vereinfacht dargestellt. Die ausgezogene Linie bezieht sich dabei auf den Elektromotor 8a, die gestrichelte Linie auf den Elektromotor 8b.

Im Zeitintervall $t_0$ bis $t_1$ befindet sich die Pinole im Stillstand, indem der Motor 8a ein positives Moment $+M_1$ und der Motor 8b ein negatives Moment $-M_1$ abgibt ; die beiden Momente sind betragsmässig gleich, jedoch richtungsmässig entgegengesetzt. Zum Zeitpunkt $t_1$ soll die Pinole in eine vergleichsweise weit entfernte Winkelposition verdreht werden. Dazu wird das vom Motor 8a aufgebrachte Drehmoment vom Wert $+M_1$ auf den Wert $+M_3$ vergrössert ; gleichzeitig wird der Motor 8b bezüglich seiner Drehrichtung umgesteuert, so dass er ein Drehmoment mit dem Wert $+M_2$ abgibt. Der Wert $+M_2$ ist kleiner als der Wert $+M_3$, was zur Folge hat, dass die Vorspannung im Antriebsstrang aufrecht erhalten bleibt. Zum Zeitpunkt $t_2$ sei eine Winkelposition erreicht, die schon recht nahe an der Sollposition liegt. Daher wird der Motor 8b in diesem Zeitpunkt bezüglich seiner Drehrichtung umgesteuert und gibt nun, wie schon während des Stillstandes, wiederum ein Moment $-M_1$ ab. Er wirkt nun als verstärkte Bremse auf den Motor 8a und erhöht die Vorspannung im Antriebsstrang. Sobald die Sollposition erreicht ist, im Zeitpunkt $t_3$, wird das Drehmoment des Motors 8a auf den Wert $+M_1$ gesenkt, so dass die Pinole im Intervall von $t_3$ bis $t_4$ stillsteht. Der Motor 8b hingegen bleibt auch im Zeitpunkt $t_3$ unverändert und liefert weiter das negative Moment mit dem Wert $-M_1$.

Angenommen, die Pinole soll im Zeitpunkt $t_4$ in eine benachbarte Winkelposition in der gleichen Drehrichtung bewegt werden. Zu diesem Zweck wird das Drehmoment des Motors 8a auf den Wert $+M_3$ erhöht, währenddem der Motor 8b in seinem bisherigen Betriebszustand belassen wird. Im Zeitpunkt $t_5$, wenn die gewünschte neue Position erreicht ist, wird das Drehmoment des Motors 8a wieder auf den Wert $+M_1$ abgesenkt, so dass sich die Momente der beiden Motoren 8a und 8b wieder ausgleichen und die Pinole

stillsteht. Im Zeitpunkt $t_6$ soll die Pinole wieder in ihre vorherige, benachbarte Position verdreht werden. Dazu wird das Drehmoment des Motors 8b vom Wert $-M_1$ auf den Wert $-M_3$ erhöht, während der Motor 8a unverändert auf dem Wert $+M_1$ belassen wird : Die Pinole rotiert unter Einfluss des Motors 8b in entgegengesetzter Richtung.

Zum Zeitpunkt $t_7$ ist die neue Position erreicht und das Drehmoment des Motors 8b wird wieder auf den Wert $-M_1$ abgesenkt, damit die Pinole bis zum Zeitpunkt $t_8$ stillsteht. Anschliessend soll eine grössere Verdrehung der Pinole in der Minus-Richtung erfolgen. Dazu wird gleichzeitig das Drehmoment des Motors 8b auf den Wert $-M_3$ erhöht und der Motor 8a umgesteuert, bis er ein gegenüber dem Moment $-M_3$ geringeres Moment $-M_2$ liefert. Er wirkt hier also als mässige Bremse und hält so die Vorspannung im Antriebsstrang aufrecht. Wenn die neue Sollposition schon fast erreicht ist, d.h. im Zeitpunkt $t_9$, erfolgt erneut eine Umsteuerung des Motors 8a, der nun wieder das Drehmoment $+M_1$ abgibt und so den Motor 8b stärker bremst. Im Zeitpunkt $t_{10}$ ist die neue Sollposition erreicht und das Drehmoment des Motors 8b wird auf den Wert $-M_1$ reduziert, während der Motor 8a unverändert ein positives Drehmoment $+M_1$ abgibt ; die Pinole steht bis zum Zeitpunkt $t_{11}$ still.

Aus den vorstehenden Darlegungen geht hervor, dass die beiden Motoren 8a und 8b stets unterschiedlich auf den Antriebsstrang, gebildet aus Zahnriemen 11a bzw. 11b, Getriebe 6a bzw. 6b, Zahnräder 5a bzw. 5b sowie 7a bzw. 7b und Zahnrad 4, einwirken und dadurch immer eine Vorspannung erzeugen. Beim schnellen Verdrehen der Pinole ist diese Vorspannung zwar geringer, doch genügt sie den in diesem Fall nicht so hohen Genauigkeitsanforderungen.

Ein kritischer Moment könnte unter Umständen in den Zeitpunkten $t_1$ und $t_8$ auftreten, nämlich dann, wenn gleichzeitig der eine Motor umgesteuert und das Drehmoment des anderen erhöht wird. Wenn die Massenträgheit des Antriebsstranges nicht ausreicht, diesen Moment zu dämpfen, könnte gemäss einer Weiterbildung vorgesehen werden, dass die Umsteuerung des einen bzw. die Momenterhöhung des anderen Motors nicht genau gleichzeitig erfolgt.

Aus Fig. 4a ist zu entnehmen, dass das Drehmoment des Motors 8a genau im Zeitpunkt $t_1$ erhöht wird, und dass die Umsteuerung des Motors 8b und das Hochfahren des Drehmomentes auf den Wert $+M_2$ mit einer geringen, zeitlichen Verzögerung $\Delta t$ erfolgt. Dadurch ist gewährleistet, dass der Motor 8b erst dann umgesteuert wird, wenn der Motor 8a sein vorbestimmtes Drehmoment erreicht hat, und so während des Hochfahrens des Motors 8a die Vorspannung im Antriebsstrang aufrecht erhält. Entsprechend ist die Situation gemäss Fig. 4b im Zeitpunkt $t_8$ : Der Motor 8a wird erst nach einer Verzögerungszeit $\Delta t$ umgesteuert, wenn der Motor 8b sein gefordertes Drehmoment $-M_3$ erreicht hat.

Die Grössenverhältnisse der Drehmomente $M_1$, $M_2$ und $M_3$ hängen vom jeweiligen Anwendungsfall ab. Als Anhaltspunkt kann davon ausgegangen werden, dass der Betrag von $M_1$ etwa 15-40%, vorzugsweise etwa 20% und der Betrag von $M_2$ etwa 60-85%, vorzugsweise etwa 80% des Betrages von $M_3$ ist.

Mit der erfindungsgemässen Drehantriebvorrichtung wird jegliches Spiel im Getriebe und zwischen den Zahnrädern eliminiert bzw. wirkungslos gemacht und die Elastizität im gesamten Antriebsstrang kompensiert. Daher ist eine aussergewöhnlich hohe Drehwinkel-Positioniergenauigkeit möglich, die in der Grössenordnung von 1/1000 Winkelgrad liegt, ohne dass aufwendige, präzise, teure und verschleissanfällige Antriebselemente angewendet werden müssten. Die Pinole bzw. die Werkstückaufnahme kann sehr rasch in eine bestimmte Position verdreht werden, und die Drehbewegung kann sofort, ohne Überschwingen, gestoppt werden. Letzteres ist besonders bei der Funkenerosion wichtig, da beim Heranfahren der Elektrode an das Werkstück plötzlich ein Funke auftritt ; zu diesem Zeitpunkt muss die Bewegung sofort angehalten werden. An welchem Punkt dies geschieht, kann nicht mit Sicherheit vorausgesagt werden.

## Ansprüche

1. Erodiermaschine mit einer Drehantriebsvorrichtung für die Pinole oder die Werkstückaufnahme, dadurch gekennzeichnet, dass die Drehantriebsvorrichtung mindestens zwei bezüglich der Drehrichtung umsteuerbare Elektromotoren (8a, 8b) und je ein jedem Elektromotor zugeordnetes Reduktionsgetriebe (6a, 6b) aufweist, das ein mit dem Elektromotor gekoppeltes und von diesem angetriebenes Eingangsglied (12a, 12b) sowie ein mit der Pinole (2) oder der Werkstückaufnahme gekoppeltes und jene antreibendes Ausgangsglied (7a, 7b) aufweist, und dass sie einen mit der Pinole oder der Werstückaufnahme gekoppelten Drehgeber (3) sowie ein mit dem Drehgeber und den Elektromotoren verbundenes Steuergerät aufweist, welches mindestens zwei der Elektromotoren (8a, 8b) betrags- und/oder richtungsmässig stets ungleich antreibt.

2. Erodiermaschine nach Anspruch 1, dadurch gekennzeichnet, dass zwei Elektromotoren (8a, 8b) vorgesehen sind.

3. Erodiermaschine nach den Ansprüchen 1 und 2, dadurch gekennzeichnet, dass die beiden Elektromotoren (8a, 8b) bei Stillstand der Pinole (2) bzw. der Werkstückaufnahme betragsmässig gleich, aber richtungsmässig entgegengesetzt angetrieben sind.

4. Erodiermaschine nach den Ansprüchen 1 und 2, dadurch gekennzeichnet, dass die beiden Elektromotoren (8a, 8b) beim Antrieb der Pinole bzw. der Werkstückaufnahme zu einer ersten, höheren Drehgeschwindigkeit betragsmässig unterschiedlich, aber richtungsmässig gleich angetrieben sind.

5. Erodiermaschine nach den Ansprüchen 1 und 2, dadurch gekennzeichnet, dass die beiden Elektromotoren (a, 8b) beim Antrieb der Pinole bzw. der Werkstückaufnahme zu einer zweiten, niedrigeren Drehgeschwindigkeit betragsmässig unterschiedlich, und richtungsmässig entgegengesetzt angetrieben sind.

6. Erodiermaschine nach den Ansprüchen 3 und 5, dadurch gekennzeichnet, dass der eine Elektromotor (8a bzw. 8b) sowohl beim Stillstand als auch bei der zweiten, niedrigeren Drehgeschwindigkeit der Pinole bzw. der Werkstückhalterung betrags- und richtungsmässig gleich angetrieben ist.

7. Erodiermaschine nach einem oder mehreren der Ansprüche 3 bis 6, dadurch gekennzeichnet, dass der eine Elektromotor (8a bzw. 8b) beim Uebergang vom Stillstand der Pinole bzw. der Werkstückaufnahme in die erste, höhere Drehgeschwindigkeit im gleichen Drehsinn zu höherer Geschwindgkeit und der andere Elektromotor (8b bzw. 8a) zu umgekehrtem Drehsinn umgesteuert wird, wobei die Umsteuerung des genannten, anderen Elektromotors (8b bzw. 8a) verzögert erfolgt.

## Claims

1. Erosion machine having a rotary drive mechanism for the sleeve or the work holder, characterised in that the rotary drive mechanism has at least two electric motors (8a, 8b) which can be reversed as regards the direction of rotation and one reduction gear unit (6a, 6b) allocated to each electric motor, which has an input member (12a, 12b) coupled to the electric motor and driven by the latter, and an output member (7a, 7b) coupled to the sleeve (2) or the work holder and driving the latter, and in that it has a shaft encoder (3) coupled to the sleeve or the work holder and a control device, connected to the shaft encoder and the electric motors, which always drives at least two of the electric motors (8a, 8b) by a different amount and/or in different directions.

2. Erosion machine according to Claim 1, characterised in that two electric motors (8a, 8b) are provided.

3. Erosion machine according to Claims 1 and 2, characterised in that, when the sleeve (2) or the work holder is at a standstill, the two electric motors (8a, 8b) are driven by the same amount but in opposite directions.

4. Erosion machine according to Claims 1 and 2, characterised in that, when the sleeve or the work holder is driven at a first, relatively high speed of rotation, the two electric motors (8a, 8b) are driven by a different amount but in the same direction.

5. Erosion machine according to Claims 1 and 2, characterised in that, when the sleeve or the work holder is driven at a second, relatively low speed of rotation, the two electric motors (8a, 8b) are driven by a different amount and in opposite directions.

6. Erosion machine according to Claims 3 and 5, characterised in that one electric motor (8a or 8b) is driven by the same amount and in the same direction both when the sleeve or the work-holding device is at a standstill and at the second, relatively low speed of rotation of the sleeve or the work-holding device.

7. Erosion machine according to one or more of Claims 3 to 6, characterised in that, upon the transition from the standstill of the sleeve or the work holder to the first, relatively high speed of rotation in the same direction of rotation, one electric motor (8a or 8b) is switched over to higher speed and the other electric motor (8b or 8a) is switched over to the reverse direction of rotation, the reversing of said other electric motor (8b or 8a) being carried out with a delay.

## Revendications

1. Machine à érosion, équipée d'un dispositif d'entraînement rotatif pour la broche ou le support de la pièce à usiner, caractérisée en ce que le dispositif d'entraînement rotatif comporte au moins deux moteurs électriques (8a, 8b) à sens de rotation réversible et un mécanisme réducteur (6a, 6b) associé à chaque moteur électrique, qui comporte un élément d'entrée (12a, 12b) couplé au moteur électrique et entraîné par celui-ci, ainsi qu'un élément de sortie (7a, 7b) couplé à la broche (2) ou au support de la pièce à usiner et entraînant celui-ci, et en ce qu'elle comporte un générateur d'impulsions de rotation (3) couplé à la broche ou au support de la pièce à usiner ainsi qu'un appareil de commande relié au générateur d'impulsions de rotation et aux moteurs électriques, qui entraîne au moins deux des moteurs électriques (8a, 8b) en permanence de façon inégale en quantité et/ou sens.

2. Machine à érosion selon la revendication 1, caractérisée en ce que deux moteurs électriques (8a, 8b) sont prévus.

3. Machine à érosion selon les revendications 1 et 2, caractérisée en ce que les deux moteurs électriques (8a, 8b) sont entraînés, lors de l'arrêt de la broche (2) ou du support de la pièce à usiner, de la même quantité mais dans des sens opposés.

4. Machine à érosion selon les revendications 1 et 2, caractérisée en ce que les deux moteurs électriques (8a, 8b) sont entraînés, lors de l'entraînement de la broche ou du support de la pièce à usiner à une première vitesse de rotation supérieure, d'une quantité différente, mais dans le même sens.

5. Machine à érosion selon les revendications 1 et 2, caractérisée en ce que les deux moteurs électriques (8a, 8b) sont entraînés, lors de l'entraînement de la broche ou du support de la pièce à usiner, à une seconde vitesse de rotation, inférieure, d'une quantité différente et selon des sens opposés.

6. Machine à érosion selon les revendications 3 et 5, caractérisée en ce qu'un des moteurs électriques (8a ou 8b) est entraîné, aussi bien lors de l'arrêt que lors de la seconde vitesse de rotation, inférieure, de la broche ou du support de la pièce à usiner, de la même quantité et dans le même sens.

7. Machine à érosion selon l'une quelconque des revendications 3 à 6, caractérisée en ce qu'un des moteurs électriques (8a ou 8b) est commandé, lors du passage de l'arrêt de la broche ou du support de pièce à usiner à la première vitesse de rotation, supérieure, dans le même sens de rotation à une vitesse supérieure, et l'autre moteur électrique (8b ou 8a) est commandé selon un sens de rotation inversé, la commande dudit autre moteur électrique (8b ou 8a) s'effectuant de façon différée.

FIG. 1

FIG. 2

FIG. 3

FIG. 4a

FIG. 4b